# EUROPÄISCHE PATENTANMELDUNG

(11) **EP 3 248 700 A1**
(43) Veröffentlichungstag der Anmeldung: **29.11.2017**
(21) Anmeldenummer: 17169448.2
(22) Anmeldetag: 04.05.2017
(51) Int. Cl.: B08B 9/08, B08B 15/04, B08B 1/04, B08B 1/00, B29C 63/00, B30B 9/32, G07F 7/06

(54) **LEERGUTANNAHMEVORRICHTUNG UND VERFAHREN ZUR ANNAHME VON LEERGUT**

(30) Priorität: 23.05.2016 DE 102016208880
(71) Anmelder: Ernst Hombach GmbH & Co. KG, 91486 Uehlfeld (DE)
(72) Erfinder: LINNEKOGEL, Frank, 99438 Bad Berka (DE); TOBOLLA, Timo, 91413 Neustadt/Aisch (DE)
(74) Vertreter: Kierdorf Ritschel Richly

(57) **Zusammenfassung**

Die Erfindung betrifft eine Leergutannahmevorrichtung, mit einem Eingabebereich (4) zum Eingeben von Leergut (6) in die Leergutannahmevorrichtung (2) und einer dem Eingabebereich (4) zugeordneten Transportvorrichtung (8), wobei die Transportvorrichtung (8) dazu eingerichtet ist, das Leergut (6) entlang eines Transportwegs (10) zu fördern. Entlang des Transportwegs (10) ist eine Vorrichtung (12) zum Ab-Etikettieren des Leerguts (6) angeordnet, die dazu eingerichtet ist, ein an dem Leergut (6) angebrachtes Etikett (14) zumindest teilweise von dem Leergut (6) zu entfernen.

## Beschreibung

Die vorliegende Erfindung betrifft eine Leergutannahmevorrichtung, mit einem Eingabebereich zum Eingeben von Leergut in die Leergutannahmevorrichtung und einer dem Eingabebereich zugeordneten Transportvorrichtung, wobei die Transportvorrichtung dazu eingerichtet ist, das Leergut entlang eines Transportwegs zu fördern. Weiter betrifft die Erfindung ein Verfahren zur Annahme von Leergut.

Pfandautomaten bzw. Vorrichtungen zur Annahme von Leergut dienen in der Praxis insbesondere dazu, Ein- und Mehrwegflaschen aus PET (Polyethylenterephthalat), Glas oder Metall ihren entsprechenden Pfandwert zuzuordnen und diese voneinander zu separieren. Die Mehrwegflaschen werden anschließend durch Reinigungs- und Spülvorgänge für ein erneutes Befüllen aufbereitet. Die Einwegflaschen werden in einem Recyclingprozess zu Rohstoff weiterverarbeitet. Dieser Rohstoff wird erneut zur Herstellung von Kunststoffflaschen eingesetzt.

Etiketten, die an den Einwegflaschen vorgesehen sind, führen zu einer Verunreinigung des PET im Recyclingprozess. Die Etiketten werden daher vor der Weiterverarbeitung der Einwegflaschen in Wasserbädern entfernt. Dieser Vorgang wird jedoch erschwert bzw. unmöglich, wenn die Einwegflaschen bereits innerhalb eines Pfandautomaten komprimiert, gehäckselt oder kompaktiert werden, um deren Volumen für den Transport zu reduzieren.

Neben der Reduktion des Volumens dient das Häckseln, Kompaktieren oder Komprimieren von Einwegflaschen innerhalb einer Leergutannahmevorrichtung zudem der Zerstörung des Pfandlogos, um einem Missbrauch im Rahmen einer erneuten, mehrfachen Verwendung einzelner Pfandlogos entgegenzuwirken. Die Verunreinigung des PET-Rohstoffs durch die Etiketten wird daher vor dem Hintergrund des Pfandmissbrauchs bis zu einem gewissen Grad hingenommen.

Hiervon ausgehend liegt der Erfindung die technische Problemstellung zugrunde, eine verbesserte Leergutannahmevorrichtung und ein verbessertes Verfahren zur Annahme von Leergut anzugeben, welche die voranstehend beschriebenen Nachteile nicht oder zumindest in geringerem Maße aufweisen und insbesondere das Bereitstellen einer höheren Rohstoffqualität für den Recyclingprozess von Einwegflaschen sowie die Reduzierung von Pfandmissbrauch ermöglichen.

Die voranstehend beschriebene technische Problemstellung wird durch eine Leergutannahmevorrichtung nach Anspruch 1 sowie ein Verfahren zur Annahme von Leergut nach Anspruch 16 gelöst.

Gemäß einem ersten Aspekt betrifft die Erfindung eine Leergutannahmevorrichtung, mit einem Eingabebereich zum Eingeben von Leergut in die Leergutannahmevorrichtung und einer dem Eingabebereich zugeordneten Transportvorrichtung, wobei die Transportvorrichtung dazu eingerichtet ist, das Leergut entlang eines Transportwegs zu fördern. Entlang des Transportwegs ist eine Vorrichtung zum Ab-Etikettieren des Leerguts angeordnet, die dazu eingerichtet ist, ein an dem Leergut angebrachtes Etikett zumindest teilweise von dem Leergut zu entfernen. Wenn vorliegend von "Leergut" gesprochen wird, so handelt es sich dabei insbesondere um einen Getränkebehälter, wobei die Begriffe "Leergut", "Leergutbehälter", "Gebinde" und "Getränkebehälter" nachstehend synonym verwendet werden. Die Leergutannahmevorrichtung ist insbesondere zur Annahme von Leergut, insbesondere Flaschen, aus Kunststoff, wie PET oder dergleichen, vorgesehen.

Das zu entfernende Etikett kann an das Leergut angeklebt sein. Das Etikett kann aus PP (Polypropylen) hergestellt sein. Das Etikett kann alternativ oder ergänzend durch Aufschrumpfen oder umfangsseitiges Verkleben bzw. Verschweißen einer Nahtstelle form- und/oder kraftschlüssig an dem Leergutbehälter gehalten sein.

Das Etikett kann eine Naht- oder Klebestelle aufweisen, die entlang einer Längserstreckung des Leergutbehälters orientiert ist. Das Etikett kann eine Banderole sein, die entlang einer Naht- oder Klebestelle derart überlappend verklebt ist, dass durch die Klebestelle einerseits zwei einander zugeordnete Enden der Banderole miteinander verklebt werden, und zudem wenigstens ein Ende der Banderole an einer umfangsseitigen Mantelfläche des Leerguts anhaftet.

Innerhalb der Leergutannahmevorrichtung kann die Naht- oder Klebestelle des Etiketts im Wesentlichen parallel zu dem Transportweg der Transportvorrichtung orientiert sein. Eine quer zu ihrer Längserstreckung gemessene Breite der Naht- oder Klebestelle kann weniger als 3 cm betragen.

Durch das zumindest teilweise Entfernen eines an dem Leergut angebrachten Etiketts kann der einem nachfolgenden Recyclingprozess zugeführte Rohstoff in seiner Qualität verbessert werden, da weniger Material der Etiketten den Behälterrohstoff, insbesondere das PET, verunreinigt.

Das "zumindest teilweise Entfernen" eines Etiketts von einem Leergutbehälter umfasst beispielsweise ein Lösen, Auftrennen, Zerschneiden, Perforieren, Auf- und/oder Abreißen, Zerfetzen, Aufschmelzen oder Zersetzen des Etiketts.

Das zumindest teilweise Entfernen des Etiketts von dem Leergut kann durch mechanisches, chemisches, thermisches oder berührungsloses Einwirken auf das Etikett erfolgen.

Das Etikett kann mechanisch durch einen Kontakt mit einem Werkzeug zumindest teilweise entfernt werden, insbesondere vollständig entfernt werden. Das Werkzeug kann eine bestimmte oder eine unbestimmte Schneide aufweisen. Eine bestimmte Schneide weist wenigstens einen Schneidkeil auf, wie z.B. ein Messer eines Messerkopfs. Eine unbestimmte Schneide weist zufällig angeordnetes Schneidkorn auf, wie Schleifpapier oder dergleichen. Das mechanische Entfernen von Etiketten hat den Vorteil, dass es kostengünstig realisiert werden kann.

Das Etikett kann alternativ oder ergänzend durch ein Strahlverfahren wie Sand-, Wasser- oder Dampfstrahlen von dem Leergut gelöst werden. Das Strahlen des Etiketts hat den Vorteil, das Klebstoff an oder von dem Etikett gelöst oder entfernt werden kann. Klebstoff kann eingesetzt werden, um ein Etikett entlang einer Nahtstelle zusammenzuhalten oder zum Verbinden des Etiketts mit einer Mantelfläche eines Getränkebehälters oder Gebindes. Wird die Haftwirkung eines solchen Klebstoffs beeinträchtigt, kann das Entfernen des Etiketts von dem Leergut begünstigt werden.

Das Etikett kann durch Einwirken mit einer chemischen Substanz zumindest teilweise, entfernt werden, insbesondere vollständig entfernt werden. Eine chemische Substanz kann dem zumindest teilweisen, insbesondere vollständigen Auflösen eines Etiketts dienen.

Alternativ oder ergänzend kann eine chemische Substanz in Kombination mit einem Wasser- oder Dampfstrahlverfahren eingesetzt werden, um Klebstoff in seiner Haftwirkung einzuschränken, wie voranstehend bereits dargelegt.

Das Etikett kann thermisch, beispielsweise durch Laserschneiden, zumindest teilweise entfernt werden, insbesondere vollständig entfernt werden.

Die voranstehend beschriebenen Einrichtungen bzw. Verfahren zum Entfernen des Etikettes können in einer Vorrichtung zum Ab-Etikettieren kombiniert werden. Es versteht sich, dass durch die Vorrichtung zum Ab-Etikettieren auch zwei oder mehr Etiketten von einem Getränkebehälter zumindest teilweise entfernt werden könne, insbesondere vollständig entfernt werden können.

Die Transportvorrichtung kann eine Linearfördereinheit aufweisen, die dazu vorgesehen ist, das Leergut entlang eines Transportwegs durch die Leergutannahmeeinrichtung zu leiten. Dabei kann die Transporteinrichtung dazu ausgebildet sein, das Eingeben von Leergut durch einen Bediener zu unterstützen, indem die Transporteinrichtung als Einzug wirkt.

Eine Längsachse oder eine Längserstreckung des Leerguts kann innerhalb der Leergutannahmevorrichtung bevorzugt parallel zum Transportweg bzw. einer Transportstrecke oder einer Transportrichtung orientiert sein, entlang derer das Leergut von der Transportvorrichtung durch die Leergutannahmevorrichtung geführt wird.

Die Transporteinrichtung kann dazu eingerichtet sein, das Leergut in einen Eingabebereich der Leergutannahmevorrichtung einzuziehen und das Leergut gegebenenfalls aus diesem Bereich wieder auszuwerfen. Ein Auswerfen von Leergut kann beispielsweise dann erforderlich sein, wenn das Leergut vorgegebene Parameter an den Leerguttyp, das Material oder den maximalen Füllstand des Leerguts nicht erfüllt.

Die Transporteinrichtung kann Ketten, Rollen, Walzen und oder Bänder umfassen, die dazu vorgesehen sind, an einer Mantelfläche des Leerguts anzuliegen, um das Leergut reibschlüssig durch die Leergutannahmevorrichtung zu leiten.

Die Transporteinrichtung kann in mehrere separate Abschnitte aufgeteilt sein, die insbesondere in Serie hintereinander angeordnet sein können. Alternativ oder ergänzend kann die Transportvorrichtung dazu vorgesehen sein, das Leergut zumindest abschnittsweise in einer horizontalen und/oder in einer vertikalen Richtung zu transportieren.

Die Leergutannahmevorrichtung kann ausschließlich zur Annahme von recyclebaren Pfandbehältern vorgesehen sein. Alternativ kann die Leergutannahmevorrichtung dazu eingerichtet sein, sowohl Ein- als auch Mehrwegpfandbehälter anzunehmen. Ergänzend kann die Leergutannahmevorrichtung dazu eingerichtet sein, auch pfandfreies Leergut anzunehmen.

Die Leergutannahmevorrichtung kann dazu eingerichtet sein, Leergut nach seinem Pfandwert und/oder seinem Material zu separieren. So kann die Transporteinrichtung beispielsweise eine Sortiereinrichtung haben, um Leergut verschiedenen Auffangbehältnissen zuzuführen.

Nach einer Weiterbildung der Leergutannahmevorrichtung kann vorgesehen sein, dass ein an dem Leergut angebrachtes Etikett vollständig von dem Leergut entfernt wird. Auf diese Weise kann sichergestellt werden, dass ein auf das Etikett aufgedrucktes Pfandlogo nicht ein zweites Mal verwendet werden kann, indem die Etiketten beispielsweise separat gesammelt und/oder zerstört werden. Weiter kann eine Verunreinigung des Behälterrohstoffs durch Etiketten im nachfolgenden Recyclingprozess gänzlich vermieden werden.

Nach einer weiteren Ausgestaltung der Leergutannahmevorrichtung ist die Vorrichtung zum Ab-Etikettieren zum zumindest teilweisen Entfernen eines oder mehrerer Etiketten derart eingerichtet, dass das Leergut, insbesondere ein PET-Getränkebehälter oder dergleichen, strukturell im Wesentlichen erhalten bleibt und nicht zerstört wird. Mit anderen Worten ist die Vorrichtung zum Ab-Etikettieren derart eingerichtet, dass das Volumen des Leerguts durch das Ab-Etikettieren im Wesentlichen unverändert bleibt und/oder eine Behälterwandung nicht zerstört und/oder plastisch verformt wird.

Die Leergutannahmevorrichtung kann eine Erkennungseinrichtung zum Erkennen von Pfandwerten aufweisen. Die Erkennungseinrichtung kann eine oder mehrere Scanner und/oder Kameras zum Erkennen von Pfandlogos oder Barcodes aufweisen. Beispielsweise kann die Erkennungseinrichtung drei bis sechs umfangsseitig um den Transportweg in einem Winkelabstand angeordnete Kameras zum Erkennen des Pfandwertes aufweisen.

Das Erkennen von Pfandwerten kann während des Transport des Leerguts entlang des Transportwegs erfolgen, um ein zügiges Verarbeiten von eingebebenem Leergut zu erreichen. Die Erkennungseinrichtung ist der Einrichtung zum Ab-Etikettieren von Etiketten entlang des Transportwegs vorgeschaltet.

Die Leergutannahmevorrichtung kann einen Pfandzähler zur Erfassung der in die Vorrichtung eingegebenen Pfandwerte sowie eine Pfandbonausgabe zum Quittieren der eingegebenen Pfandwerte aufweisen.

Gemäß einer Weiterbildung zeichnet sich die Leergutannahmevorrichtung dadurch aus, dass die Transportvorrichtung dazu eingerichtet ist, das Leergut entlang des Transportwegs einer Destruktionsvorrichtung zuzuführen, die insbesondere dazu eingerichtet ist, das Leergut zu zerkleinern und/oder zu komprimieren, und dass die Vorrichtung zum Ab-Etikettieren der Destruktionsvorrichtung entlang des Transportwegs insbesondere vorgelagert ist.

Um das Volumen des eingegebenen Leerguts zu reduzieren, kann das Leergut nach dem Ab-Etikettieren zerkleinert und/oder komprimiert werden. Beispielsweise kann das Leergut mechanisch zerkleinert werden, insbesondere durch sogenanntes "Flaken" oder Häckseln.

Alternativ oder ergänzend kann das Leergut kompaktiert bzw. komprimiert werden. Dabei wird ein Leergutbehälter mechanisch verpresst und/oder gestaucht, sodass sich beispielsweise eine im Wesentlichen quader- oder kugelförmige Gestalt ergibt. Ein Leergutbehälter kann derart komprimiert werden, dass er als Schüttgut transportiert werden kann. Beispielsweise kann ein komprimierter bzw. kompaktierter Leergutbehälter durch eine Absaugvorrichtung aus einem der Leergutannahmevorrichtung zugeordneten Auffangcontainer gesaugt und als Schüttgut verladen und abtransportiert werden.

Während das Ab-Etikettieren den Leergutbehälter in seiner Struktur bzw. seiner Behälterform bevorzugt im Wesentlichen unverändert lassen kann, bewirkt die Destruktionsvorrichtung ein Zerstören der ursprünglichen Behälterform.

Nach einer Weiterbildung weist die Vorrichtung zum Ab-Etikettieren eine Einrichtung zum Aufschneiden oder Auftrennen des Etiketts auf. Das Auftrennen bzw. Aufschneiden des Etiketts kann zumindest abschnittsweise entlang einer Längsrichtung des Leerguts erfolgen. Eine Längsrichtung des Leerguts ist vorliegend eine Richtung, die entlang einer zentralen Längsachse des Leerguts orientiert ist. Die Richtung des Auftrennens bzw. Aufschneidens kann insbesondere entlang einer Transportrichtung des Transportwegs orientiert sein.

Durch das Aufschneiden oder Auftrennen des Etiketts kann erreicht werden, dass sich das Etikett zumindest teilweise von dem Leergutbehälter löst. Sofern es sich bei dem Etikett beispielsweise um eine aufgeschrumpfte Banderole handelt, die den Leergutbehälter umfangsseitig umschließt, kann ein längsseitiges Auftrennen des Etiketts bewirken, dass das Etikett von dem Behälter abfällt.

Die Einrichtung zum Aufschneiden oder Auftrennen des Etiketts kann dazu ausgebildet sein, das Etikett an wenigstens zwei Stellen derart aufzuschneiden oder zu aufzutrennen, dass das Etikett in wenigstens in zwei separate Teile zerteilt wird. Folglich ist gewährleistet, dass wenigstens ein Teil des Etiketts von dem Leergut separiert werden kann - sofern das Etikett mit lediglich einer lokalen Klebestelle an dem Leergutbehälter befestigt ist.

Das Auftrennen oder Aufschneiden des Etiketts kann entlang einer Längsrichtung des Leergutbehälters und insbesondere parallel zu dem Transportweg oder einer Transportrichtung erfolgen, entlang derer das Leergut durch die Leergutannahmevorrichtung geführt wird. So kann die Vorrichtung zum Ab-Etikettieren dazu eingerichtet sein, wenigstens zwei parallele Schnitte zu erzeugen, um das Etikett in wenigstens zwei Teile zu zerteilen. Die Längsschnitte können in einfacher Weise dadurch erzeugt werden, dass das Gebinde bzw. der Leergutbehälter mit seinem Etikett durch die Transporteinrichtung an einer Schneidvorrichtung vorbeigeführt wird. Das Aufschneiden, Zerteilen oder Auftrennen des Etiketts kann daher bevorzugt ohne eine Unterbrechung einer Transportbewegung des Leerguts durch die Leergutannahmeeinrichtung erfolgen.

Ein Teil des Etiketts kann durch ein wenigstens entlang zweier Trennstellen erfolgendes Auftrennen derart gelöst werden, dass es von dem Leergutbehälter abfällt und beispielsweise in einer unterhalb der Transportvorrichtung angeordneten Auffangbehälter fällt oder von einer Absaugung abgesaugt wird.

Ergänzend zu einem Aufschneiden oder Auftrennen des Etiketts können weitere Verfahren, wie Bürsten, Reiben, Schleifen oder Strahlen eingesetzt werden, um Teile des Etiketts von dem Leergutbehälter zu entfernen - insbesondere solche Teile, die mit dem Leergutbehälter verklebt sind.

Nach einer Weiterbildung der Leergutannahmevorrichtung ist vorgesehen, dass die Einrichtung zum Aufschneiden oder Auftrennen des Etiketts wenigstens eine Vorrichtung zum Laserstrahlschneiden aufweist. Durch das Aufschneiden oder Auftrennen des Etiketts mithilfe einer Laserschneideinrichtung kann gewährleistet werden, dass eine Vielzahl von Behälterformen und Etikettenarten zuverlässig bearbeitet werden können. Insbesondere ist es mittels einer Einrichtung zum Laserstrahlschneiden möglich, auch an deformierten Gebinden zuverlässig ein Aufschneiden oder Auftrennen eines oder mehrerer Etiketten zu bewirken, da entgegen mechanischer Bearbeitungsverfahren kein physischer Kontakt zwischen z.B. einer Messerschneide und dem Etikett hergestellt werden muss.

Die Intensität und/oder die Richtung der Laserstrahlung der Vorrichtung zum Laserstrahlschneiden können abhängig von dem eingegebenen Behälter und/oder dem Werkstoff des Etiketts einstellbar oder anpassbar sein.

Es können eine Mehrzahl von Laserstrahlquellen vorgesehen sein, die dazu eingerichtet sind, eines oder mehrere an einem Leergutbehälter vorgesehene Etiketten an mehreren Stellen zu zerschneiden oder zu zerteilen. Beispielsweise können bis zu sechs Laserstrahlquellen zum Zerschneiden des Etiketts vorgesehen sein.

Alternativ oder ergänzend kann vorgesehen sein, aus einer Strahlquelle mehrere Laserstrahlen abzuzweigen bzw. auszukoppeln und auf eine Mehrzahl von Schnittstellen aufzuteilen. Die Laserquelle kann eine Optik zur Verteilung bzw. zur Führung und zum Fokussieren des Laserstrahls oder der Laserstrahlen umfassen. Dabei kann es sich beispielsweise um Spiegel, Linsen, Prismen oder Faserführungen handeln.

Bei der Laserquelle kann es sich beispielsweise um einen CO2-, Faser-, Nd:YAG- oder Dioden-Laser handeln. Die Laserquelle kann mit einem Dauerstrahl oder gepulst verwendet werden.

Die Laserquelle kann ein Excimer-Laser sein. Mithilfe eines solchen Excimer-Lasers kann kurzwellige Laserstrahlung unterhalb des sichtbaren Lichts erzeugt werden, insbesondere im oder nahe des UV-Bereichs, die von dem Werkstoff des Etiketts absorbiert wird. Ein an dem Gebinde angeordnetes Etikett kann mithilfe eines Excimer-Lasers präzise aufgetrennt werden, ohne dass ein Verschweißen zwischen dem Werkstoff des Gebindes und dem Werkstoff des Etiketts stattfindet.

Ein Laserstrahl kann in einer flexiblen Faser geführt werden, die durch mechanische Aktuatoren verstellt bzw. manipuliert werden kann, um eine Schnittbewegung oder eine Schnittrichtung vorzugeben. Eine Schnittbewegung kann alternativ oder ergänzend durch Spiegel und/oder Linsensysteme erzeugt werden.

Der Laserstrahl kann zum Erzeugen einer Schnittbewegung folglich relativ zur Transporteinrichtung bewegt werden. Alternativ oder ergänzend kann die Transporteinrichtung das Leergut an dem Laserstrahl bzw. der Strahlquelle vorbeiführen, so dass das Etikett während eines Transports entlang des Transportwegs zerschnitten wird, ohne dass eine Einzug- bzw. Eingabebewegung des Leerguts innerhalb der Leergutannahmevorrichtung unterbrochen wird. Auf diese Weise lässt sich ein besonders effizientes Entfernen des Etiketts bewirken.

Ein Etikett kann beispielsweise aus Polypropylen hergestellt sein. Der Laser kann derart eingerichtet sein, dass lediglich das Polypropylen des Etiketts, nicht jedoch die Wandung eines Leergutbehälters, die beispielsweise aus einem PET-Material hergestellt sein kann, zerstört wird. Insbesondere findet durch den Laser kein Verschweißen zwischen dem Material des Etiketts und dem Material des Leergutbehälters statt.

Eine Laserschneidvorrichtung kann derart angeordnet sein, dass ein Laserstrahl im Wesentlichen normal auf ein auf einer Mantelfläche des Leergutbehälters aufgebrachtes Etikett trifft.

Um ein kostengünstiges und einfaches Aufschneiden oder Auftrennen des Etiketts zu erreichen, kann die Einrichtung zum Aufschneiden oder Auftrennen des Etiketts eine Messerschneide aufweisen. Die Messerschneide kann beispielsweise als Messerscheibe ausgestaltet sein.

Eine Messerscheibe kann dazu eingerichtet sein, mit einer Drehzahl von 500-6000 Umdrehungen/min, bevorzugt 500 - 2000 Umdrehungen/min, weiter bevorzugt ca. 1000 Umdrehungen/min zu rotieren, um das Etikett zumindest abschnittsweise mechanisch zu zerteilen.

Eine Messerscheibe kann ein- oder zweiseitig von Stütz- bzw. Anlagerollen flankiert werden, um das Etikett beim Schneiden zu fixieren und/oder zu spannen.

Die Stützrolle und die Messerscheibe können koaxial an einer Haltvorrichtung gehalten sein.

Der Durchmesser der Stützrolle kann kleiner sein, als der Durchmesser der Messerscheibe, um eine Anlage der Messerscheibe an einem zu zerschneidenden Etikett zu begünstigen.

Eine Messerschneide der Messerscheibe kann aus einem gehärteten Stahlwerkstoff hergestellt sein, um die Werkzeugstandzeit der Messerschneide zu erhöhen. Die Messerschneide kann einen Wellenschliff aufweisen.

Die Messerscheibe und/oder die Stützrolle können dazu eingerichtet sein, durch eine Federanordnung federnd elastisch gegen einen Leergutbehälter verspannt zu werden, um in einer zuverlässigen Anlage an dem Etikett entsprechende Schnitt- und Vorspannkräfte zu erzeugen.

Die Messerscheibe und/oder die Stützrolle können an einem in Richtung eines eingegebenen Leerguts verschwenkbaren Hebel angeordnet sein. Durch den verschwenkbaren Hebel kann eine zuverlässige Anlage an Leergutbehältern verschiedener Größe und verschiedenen Durchmessers gewährleistet werden.

Eine oder mehrere Messerscheiben können entlang des Transportwegs stationär angeordnet sein, so dass sich ein Vorschub entlang der Transportrichtung aus einer Bewegung des Leerguts entlang der Transportrichtung ergibt. Mit anderen Worten wird das Leergut durch die Transportvorrichtung an der Messerscheibe oder den Messerscheiben entlanggeführt, um das Etikett aufzutrennen.

Alternativ oder ergänzend können eine oder mehrere Messerscheiben an einer Vorschubeinrichtung gehalten sein, die dazu vorgesehen ist, eine oder mehrere Messerscheiben entlang des Transportwegs zu bewegen, um eine axiale Schnittvorschubbewegung zu erzeugen.

Die Messerscheibe kann eine umfangsseitig kreisrund geschlossene Schneide aufweisen. Die Messerscheibe kann alternativ mehrteilig aufgebaut sein. Beispielsweise kann die Messerscheibe einen Messerkopf mit einem oder mehreren Schneideinsätzen aufweisen, die umfangsseitige angeordnet und insbesondere austauschbar sind. So muss im Verschleißfall nicht das ganze Werkzeug, sondern lediglich die Schneideinsätze erneuert werden.

Es können beispielsweise bis zu sechs Messerscheiben vorgesehen sein, um ein Etikett an mehreren Stellen zu zerschneiden oder zu zerteilen. Insbesondere können die Messer dazu eingerichtet sein, Schnitte derart quer zu einer Längserstreckung des Leerguts zu erzeugen, dass sich die Schnitte in einer axialen Richtung betrachtet überlappen. Damit kann sichergestellte werden, dass eine längsseitige Verklebung zuverlässig wenigstens einmal durchtrennt wird.

Die Einrichtung zum Ab-Etikettieren kann sowohl eine oder mehrere Messerschneiden als auch eine oder mehrere Laserstrahlen zum Schneiden von Etiketten aufweisen. Auf diese Weise können ein zuverlässiges Entfernen von Etikettenteilen oder eines gesamten Etiketts von einem Leergutbehälter erreicht werden.

Nach einer Weiterbildung der Leergutannahmevorrichtung ist vorgesehen, dass die Einrichtung zum Aufschneiden oder Auftrennen des Etiketts dazu eingerichtet ist, das Etikett relativ zu einer Längserstreckung des Leerguts unter einem Winkel aufzuschneiden oder aufzutrennen.

Durch das Aufschneiden oder Auftrennen des Etiketts unter einem Winkel kann die Schnittdichte derart erhöht werden, dass ein an einem Leergutbehälter vorgesehenes Pfandlogo zerstört wird. Die die genormten Abmaße eines Pfandlogos bekannt, können die Schnitte derart eng benachbart ausgeführt werden, dass das Logo wenigstens einmal durchtrennt wird.

Alternativ oder ergänzend kann die Position eines Pfandlogos mithilfe eines Scanners und/oder einer Kamera bestimmt werden. Wenigstens ein Schnitt kann derart gewählt werden, dass das Pfandlogo gezielt zerschnitten wird.

Weiter kann durch eine schräge Schnittanordnung unter einem Winkel sichergestellt werden, dass Klebestreifen oder eine längsseitige Verklebung des Etikettes zumindest teilweise zerstört werden. Das Ablösen des Etiketts bzw. von Etikettenstreifen von dem Leergutbehälter wird so erleichtert.

Bevorzugt können die Schnitte derart gewählt sein, dass sie entlang einer axialen Längserstreckung des Leergutbehälters betrachtet einander zumindest teilweise überlappen.

Alternativ oder ergänzend kann vorgesehen sein, dass das Etikett durch sich kreuzende Schnitte zerteilt wird. Auf diese Weise kann eine besonders feine Zerteilung des Etiketts erreicht werden, um möglichst zuverlässig einen Großteil des Etiketts von einem Leergutbehälter zu entfernen oder das gesamte Etikett zu entfernen.

Beispielsweise kann die Vorrichtung zum Ab-Etikettieren dazu eingerichtet sein, in einer Draufsicht auf eine Längsachse des Leergutbehälters betrachtet, einen oder mehrere Schnitte zu erzeugen, die zu der Längsachse des Leergutbehälters einen Winkel einschließen, der zwischen 10° und 80°, 30° und 60° oder genau 60° beträgt. Je nach gewählten Winkel können ein Etikett und insbesondere ein Pfandlogo oder eine Klebestelle eines Etiketts ein- oder mehrfach zerteilt werden.

Die Vorrichtung zum Ab-Etikettieren kann eine Absaugvorrichtung aufweisen, die dazu vorgesehen ist, losgelöste Etikettenteile oder Etiketten abzusaugen und aus dem Bereich des Transportweges abzuführen. Die Absaugvorrichtung kann eine oder mehrere Absaugungen bzw. Absaugeinheiten aufweisen, die umfangsseitig um den Transportweg verteilt angeordnet sein können.

Durch die Absaugeinrichtung kann eine Verunreinigung des Transportweges und eine Beeinträchtigung umliegender Funktionseinheiten, wie Scanner, Kameras oder Transporteinheiten durch gelöste Etiketten oder Etikettenteile vermieden werden. Zudem könne losgelöste Etiketten oder Etikettenteile unmittelbar von dem Leergutbehälter separiert werden. Bevorzugt ist die Absaugvorrichtung dazu eingerichtet, Teile eines Etiketts oder Etiketten einem separaten Sammelbehälter zuzuführen.

Es kann eine ringförmige Absaugvorrichtung vorgesehen sein, die den Transportweg umfangsseitig umschließt, sodass ein Leergutbehälter axial durch eine zentrale Öffnung der Absaugvorrichtung durchgeführt wird. Die ringförmige Absaugvorrichtung kann dazu dienen, losgelöste Etikettenteile oder Etiketten aufzunehmen und über einen oder mehrere Absaugkanäle einem zentralen Sammelbehältnis zuzuführen.

Es können Druckluftdüsen vorgesehen sein, um losgelöste Etikettenteile oder Etiketten in Richtung der Absaugvorrichtung zu bewegen oder das Etikett oder Etikettenteile von einer äußeren Mantelfläche des Gebindes abzuheben.

Alternativ oder ergänzend zu einer Absaugvorrichtung können umfangsseitig um einen Leergutbehälter angeordnete Walzen vorgesehen sein. Die Walzen sind dazu eingerichtet, sich lösende Etikettenteile oder Etiketten einzufangen und von dem Leergutbehälter abzuziehen. Die Walzen können umfangsseitig Haftelemente aufweisen, die an dem Werkstoff des Etiketts anhaften. Alternativ oder ergänzend können innerhalb der Walzen Absaugbohrungen angeordnet sein, um losgelöste Etikettenteile oder Etiketten anzusaugen und abzuführen.

Eine Weiterbildung der Leergutannahmevorrichtung zeichnet sich dadurch aus, dass die Vorrichtung zum Ab-Etikettieren wenigstens eine oder mehrere Bürsten aufweist. Die eine oder mehreren Bürsten können dazu eingerichtet sein, ein Etikett mit ihren Borsten zumindest teilweise von einem Gebinde zu entfernen, insbesondere vollständig von einem Gebinde zu entfernen.

Die Borsten können derart steif aus einem metallischen oder einem Kunststoffwerkstoff hergestellt sein, dass eine Bürstenbewegung ein Abreißen, Zerfetzen oder Abschrubben eines oder mehrerer Etiketten von einer äußeren Mantelfläche eines Leergutbehälters ermöglicht. Insbesondere im Bereich von Klebestellen können Etiketten mithilfe einer oder mehrerer Bürsten zuverlässig entfernt werden.

Die Vorrichtung zum Ab-Etikettieren kann eine Kombination aus hintereinandergeschalteten Schneid- und Bürsteinrichtungen aufweisen. So kann ein Etikett innerhalb der Leergutannahmeeinrichtung zuerst zumindest teilweise zerschnitten werden, um anschließend mithilfe von Bürsten insbesondere vollständig entfernt zu werden. Dabei können sich bereits durch den Schneidvorgang losgelöste Etikettenteile in den Bürsten verfangen, so dass kann ein Abreißen der restlichen Etikettenteile von dem Leergutbehälter erfolgen kann. Durch ein Zerreißen oder ein Zerfetzen von Etiketten durch die Bürsten kann ein Zerstören eines auf einem Etikett aufgedruckten Pfandlogos begünstigt werden.

Bei der Bürste kann es sich beispielsweise um eine Rundbürste handeln. Eine solche Rundbürste weist umfangsseitig verteilt angeordnete Borsten auf. Mithilfe der Rundbürsten lassen sich in einfacher Weise durch eine Bürstenrotation hohe Relativgeschwindigkeiten zwischen den Borsten der Bürste und dem abzulösenden bzw. zu entfernenden Etikett erzeugen.
Die Rotationsachse einer solchen Rundbürste kann im Wesentlichen parallel zu einer Längsachse eines zu bearbeitenden Leergutbehälters orientiert sein.

Die Rotationsachse kann quer, unter einem Winkel und/oder mit einem Achsabstand zu einer Längsachse eines zu bearbeitenden Leergutbehälters orientiert sein.

Eine Rundbürste mit im Wesentlichen parallel zu einer Längsachse des Leergutbehälters orientierter Rotationsachse kann eine entlang der Rotationsachse gemessene Längenabmessungen aufweisen, die im Wesentlichen der maximalen Längenabmessung von eingegebenen Leergutbehältern entspricht. Folglich können Etiketten in einfacher Weise und besonders zuverlässig dadurch entfernt werden, dass ein Leergutbehälter an einer Bürstenlänge entlanggeführt wird, die im Wesentlichen einer Längserstreckung des Behälters selbst entspricht.

Die Vorrichtung zum Ab-Etikettieren kann eine Kombination aus einer Mehrzahl von Rundbürsten aufweisen, deren Rotationsachsen parallel oder windschief, insbesondere mit einem Achsabstand zu einer Längsachse eines eingegebenen Leergutbehälters orientiert sind. Je nach Faserstruktur oder Vorspannung eines abzulösenden Etiketts lässt sich das jeweilige Etiketts einfacher in Längsrichtung oder in Umfangrichtung aufreißen oder ablösen. Durch eine Kombination mehrerer Bürsten, die jeweils voneinander verschiedene Relativbewegungen zu dem Etikett durchführen, kann ein zuverlässiges Ablösen der Etiketten unabhängig von ihrer Faserorientierung oder Vorspannung erreicht werden.

Alternativ oder ergänzend können eine oder mehrere Bürsten vorgesehen sein, die nach Art von Topfbürsten geformt sind. Die Bürsten weisen einen Grundkörper auf, an dem an einer Seite eine Vielzahl von im Wesentlichen in einer gemeinsamen Richtung erstreckten Borsten angeordnet sind. Die Rotationsachse einer solchen Bürste kann sich beispielsweise mit einer Längsachse eines zu bearbeitenden Leergutbehälters schneiden, insbesondere orthogonal dazu orientiert sein.

Beispielsweise können drei oder mehr umfangsseitig angeordnete Bürsten vorgesehen sein, um ein zuverlässiges Entfernen des Etiketts oder von Etikettenteilen zu gewährleisten.

Durch die Bürstenrotation einer oder mehrerer an einem Etikett anliegender Bürsten kann innerhalb eines Etiketts ein Spannungszustand erzeugt werden, der zu einem Zerreißen bzw. Aufreißen des Etiketts führt.

Eine Bürste kann mit einem Antriebsmotor gekoppelt sein, der dazu eingerichtet ist, eine Bürstendrehzahl von bis zu 6000 Umdrehungen/min zu erzeugen.

Die Bürsten können mit einer voranstehend bereits beschriebenen Absaugvorrichtung zusammenwirken, um Etiketten bzw. Etikettenteile aus dem Transportbereich abzuführen.

Alternativ oder ergänzend können die Bürsten mit einer voranstehend bereits beschriebenen Drucklufteinrichtung kombiniert werden, um Etiketten oder Etikettenteile von einer Mantelfläche eines Leergutbehälters abzuheben und in Richtung einer Absaugvorrichtung zu führen. Dazu können mehrere Düsen vorgesehen sein, die dazu eingerichtet sind, Druckluft entlang einer äußeren Mantelfläche eines in die Leergutannahmevorrichtung eingeführten Gebindes zu leiten.

Um ein Ablösen der umfangsseitig angeordneten Etiketten von einem Leergutbehälter zu erreichen, können wenigstens zwei, insbesondere drei Bürsten vorgesehen sein, wobei wenigstens zwei Bürsten insbesondere dazu eingerichtet sind, gegenläufig zu rotieren.

Ein Andrücken bzw. Anpressen der Bürsten an ein Etikett kann durch einen oder mehrere Aktuatoren erfolgen. Der oder die Aktuatoren sind dazu vorgesehen, eine oder mehrere Bürsten in Richtung eines zu bearbeitenden Leergutbehälters zu bewegen und mit diesem in Anlage zu bringen.

Alternativ oder ergänzend kann der Leergutbehälter mithilfe der Transporteinrichtung oder durch Druckluft in Richtung einer Bürste bewegt werden, insbesondere angehoben werden, um eine äußere Mantelfläche des Leergutbehälters bzw. ein daran angebrachtes Etikett mit den Borsten einer oder mehrerer Bürsten in Anlage zu bringen.

Durch die Bürstenrotation kann der Leergutbehälter seinerseits in eine Rotationsbewegung um seine Längsachse versetzt werden.

Nach einer Weiterbildung der Leergutannahmevorrichtung ist vorgesehen, dass die Vorrichtung zum Ab-Etikettieren ein Band oder eine Kette mit einer Mehrzahl von dem Etikett zugewandten Dornen aufweist. Die Dorne können dazu eingerichtet sein, mit einem zu lösenden Etikett in Anlage gebracht zu werden und ein Abreißen und oder Aufreißen des Etiketts zu bewirken.

Die Ketten- oder Bandbewegung entlang eines Leergutbehälters kann entgegen einer Transportbewegung der Transporteinrichtung erfolgen, um ein Etikett zumindest teilweise abzureißen, insbesondere vollständig abzureißen. Dabei wird die Transportbewegung der Transporteinrichtung zusätzlich zu einer Band- oder Kettenbewegung zur Erzeugung einer Relativbewegung bzw. Schnittgeschwindigkeit zwischen den Dornen und dem Etikett ausgenutzt.

Alternativ die Bewegung der Dorne oder der Bänder kann entlang einer Transportrichtung der Transportvorrichtung erfolgen.

Es können eine Mehrzahl von Bändern vorgesehen sein, die zu parallellaufenden Bänderblöcken zusammengefasst sind. Alternativ oder ergänzend können eine Mehrzahl von umfangsseitig unter einem Winkelabstand zueinander angeordneten Bändern oder Bänderblöcken vorgesehen sein, um ein zuverlässiges Entfernen wenigstens eines Teils eines Etiketts eines Leergutbehälters zu erreichen, insbesondere ein vollständiges Entfernen zu erreichen.

Um Klebstoffe oder andere Haftmittel in ihrer Haftwirkung zu beeinträchtigen oder diese aufzulösen, kann die Vorrichtung zum Ab-Etikettieren eine Einrichtung zum Bedampfen des Etiketts aufweisen. Hierzu kann die Einrichtung zum Bedampfen des Etiketts dazu vorgesehen sein, heißen Dampf, der mit einem Lösungsmittel versehen sein kann, in den Bereich des Etiketts einzubringen.

Ergänzend zu einer Einrichtung zum Bedampfen des Etiketts können mechanisch oder thermisch wirkende Einrichtungen zum Ab-Etikettieren vorgesehen sein.

Die Vorrichtung zum Ab-Etikettieren kann nach einer weiteren Ausgestaltung der Leergutannahmevorrichtung eine Einrichtung zum Wasserstrahlschneiden aufweisen. Eine solche Vorrichtung kann einerseits das mechanische Zerteilen bewirken und andererseits das Auflösen bzw. das Verringern der Haftwirkung eines Klebstoff begünstigen.

Um einen Leergutbehälter relativ zu einer Einrichtung, die zum Lösen, Entfernen oder Zerstören des Etiketts vorgesehen ist zu fixieren, auszurichten oder zu positionieren, kann die Vorrichtung zum Ab-Etikettieren eine Einrichtung zum Einspannen des Leerguts aufweisen.

Eine solche Einrichtung zum Einspannen kann beispielsweise wenigstens drei Klemmbacken aufweisen, die dazu vorgesehen sind, einen Leergutbehälter umfangsseitig unter Winkelabständen von im Wesentlichen 120° zu halten bzw. zu fixieren.

Die Klemmwirkung kann durch Teile der Transporteinrichtung bewirkt werden. So können beispielsweise Teilabschnitte eines Transportbandes über Aktuatoren in Richtung eines Leergutbehälters bewegt werden, um den Leergutbehälter mehrseitig einzuspannen.

Um die zu recycelnden bzw. zu entsorgenden Rohstoffe in einfacher Weise bereits innerhalb einer Leergutannahmevorrichtung zu separieren und für nachstehende Transportvorgänge vorzubereiten, kann die Leergutannahmevorrichtung einen ersten Sammelbehälter zum Sammeln von Leergutbehältern und einen zweiten Behälter zum Sammeln von Etiketten und/oder Etikettenteilen aufweisen.

Beispielsweise können Etiketten und/oder Etikettenteile dem zweiten Behälter zum Sammeln von Etiketten und/oder Etikettenteilen über eine Absaugvorrichtung zugeführt werden.

Gemäß einem zweiten Aspekt betrifft die Erfindung ein Verfahren zur Annahme von Leergut, wobei die folgenden Verfahrensschritte durchlaufen werden:
- Eingeben von Leergut in eine Leergutannahmevorrichtung, die eine Vorrichtung zum Ab-Etikettieren aufweist;
- Zuführen des Leerguts zu der Vorrichtung zum Ab-Etikettieren des Leerguts;
- zumindest teilweises Entfernen von einem an dem Leergut angebrachten Etikett.

Mithilfe des erfindungsgemäßen Verfahrens können daher Etikettenteile oder Etiketten von in eine Leergutannahmevorrichtung eingegebenem Leergut entfernt werden. Die Verunreinigung von eines recyclebaren Behälterrohstoffs durch das Material der Etiketten kann reduziert oder vermieden werden.

Das erfindungsgemäße Verfahren kann mit einer erfindungsgemäßen Leergutannahmevorrichtung durchgeführt werden.

Nach einer Weiterbildung des Verfahrens ist vorgesehen, dass Leergutbehälter und Etiketten und/oder Etikettenteile innerhalb der Leergutannahmevorrichtung zumindest teilweise separiert werden. So können von einem Leergutbehälter entfernte bzw. abgelöste Etiketten oder Etikettenteile beispielsweise separaten Behältern zugeführt werden, um die Weiterverarbeitung, das Recycling oder die Entsorgung zu vereinfachen.

Nachfolgend wird die Erfindung anhand einer Ausführungsbeispiele darstellenden Zeichnung näher beschrieben. Es zeigen jeweils schematisch:
Fig. 1A - 1D eine erste Ausgestaltung einer erfindungsgemäßen Leergutannahmevorrichtung;
Fig. 2A - 2D eine zweite Ausgestaltung einer erfindungsgemäßen Leergutannahmevorrichtung;
Fig. 3A - 3D eine dritte Ausgestaltung einer erfindungsgemäßen Leergutannahmevorrichtung;
Fig. 4A - 4D eine vierte Ausgestaltung einer erfindungsgemäßen Leergutannahmevorrichtung;
Fig. 5A - 5D eine fünfte Ausgestaltung einer erfindungsgemäßen Leergutannahmevorrichtung;
Fig. 6A - 6D eine sechste Ausgestaltung einer erfindungsgemäßen Leergutannahmevorrichtung.

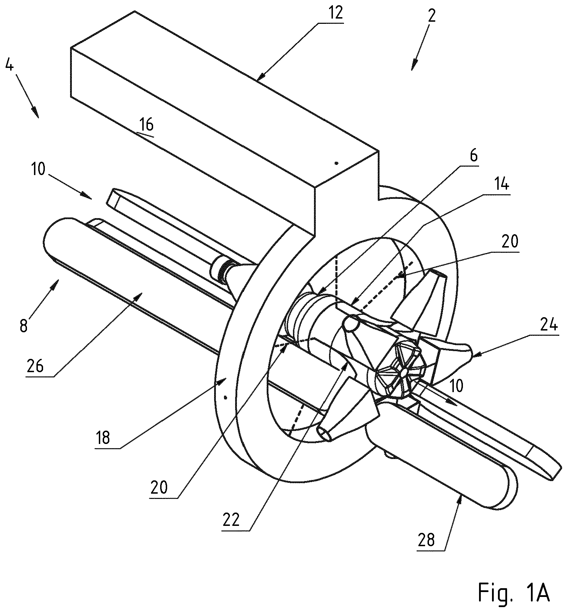

Fig. 1A zeigt eine erfindungsgemäße Leergutannahmevorrichtung 2 in einer perspektivischen Ansicht. Die Leergutannahmevorrichtung 2 hat einen Eingabebereich 4 zum Eingeben von Leergut 6 in die Leergutannahmevorrichtung 2. Dem Eingabebereich 4 ist eine Transportvorrichtung 8 zugeordnet. Die Transportvorrichtung 8 ist dazu eingerichtet, das Leergut 6 entlang eines Transportweges 10 zu fördern. Entlang des Transportwegs 10 ist eine Vorrichtung 12 zum Ab-Etikettieren des Leerguts 6 vorgesehen.

Die Vorrichtung 12 zum Ab-Etikettieren ist dazu eingerichtet, ein an dem Leergut 6 angebrachtes Etikett 14 aufzuschneiden und zu entfernen.

Die Vorrichtung 12 zum Ab-Etikettieren weist eine Laserstrahlquelle 16 auf. Der Laserstrahlquelle 16 ist ein Strahlaufteiler 18 zugeordnet. Der Strahlaufteiler 18 sorgt dafür, dass fünf Schneidstrahlen 20 erzeugt werden. Die einzelnen Schneidstrahlen 20 zerteilen das Etikett 14 längsseitig in fünf Segmente 22.

Jedem der Segmente 22 ist eine Absaugung 24 zugeordnet. Ein von dem Leergut 6 abgelöstes Segment 22 wird über die jeweils zugeordnete Absaugung 24 einem Sammelbehälter (nicht dargestellt) zugeführt.

Die Strahlaufteilung in die Schneidstrahlen 20 erfolgt im Wesentlichen unter äquidistantem Winkelversatz zu 72° und kann durch Spiegel, Prismen oder Faseroptiken erzeugt werden, die in dem Strahlaufteiler 18 angeordnet sind.

Die Transportvorrichtung 8 weist einen Einzugsbereich 26 und einen Abführbereich 28 auf. Zwischen dem Einzugsbereich 26 und dem Abführbereich 28 sind die Absaugungen 24 angeordnet, die zum Abführen der Segmente 22 des Etiketts 14 dienen.

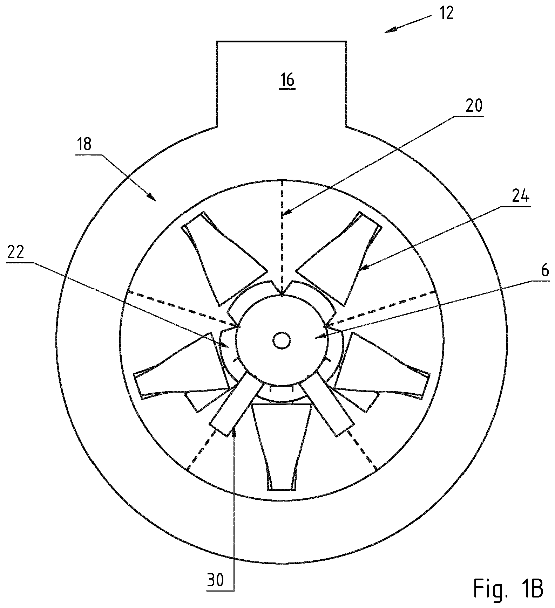

Fig. 1B zeigt eine Ansicht der Leergutannahmevorrichtung 2 entlang des Transportwegs 10. In dieser Darstellung ist noch einmal die Strahlaufteilung in die Schneidstrahlen 20 verdeutlicht. Weiter ist erkennbar, dass Transportbänder 30 des Abführbereichs 28 ihre tragenden Elemente in zu den abgesaugten Segmenten 22 der Etiketten 14 beabstandeten Bereichen haben.

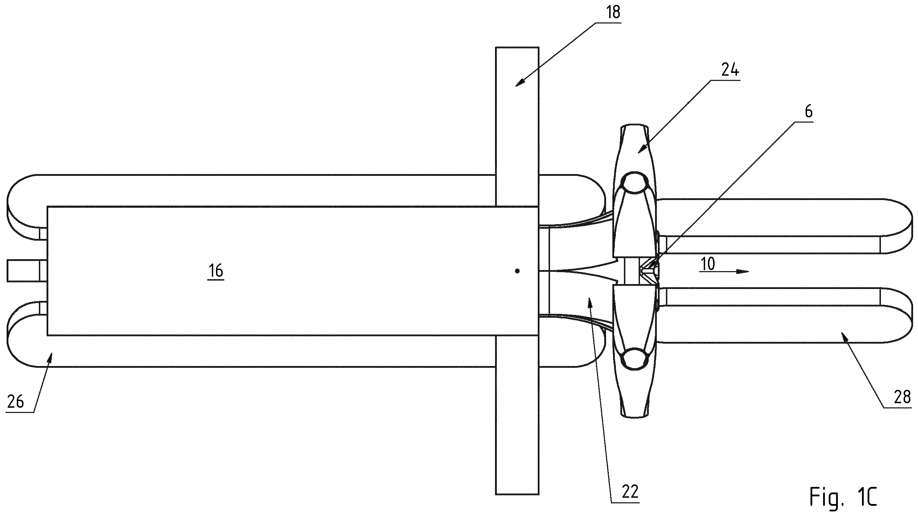

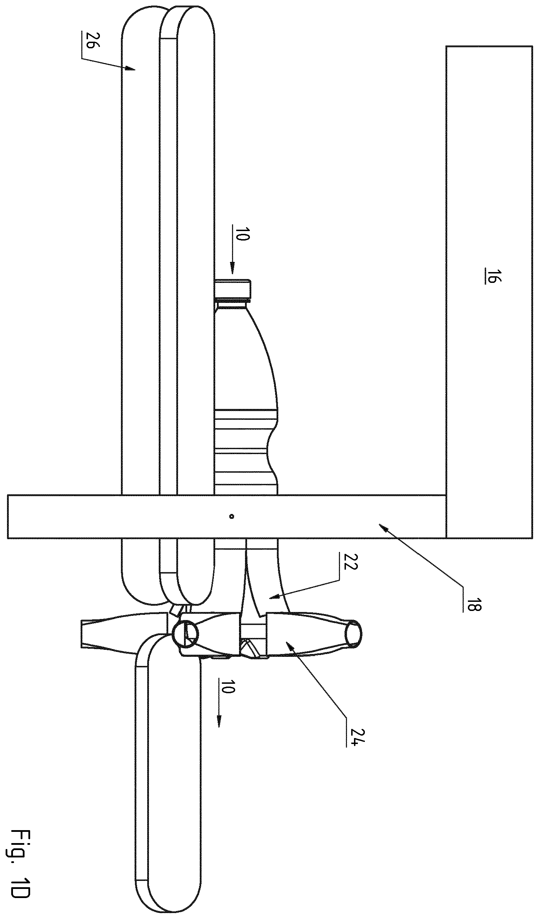

In den Figuren 1C und 1D ist ebenfalls dargestellt, wie das Etikett 14 in einzelne Segmente 22 zerteilt wird. Die einzelnen Segmente 22 werden mittels der dem jeweiligen Segment 22 zugeordneten Absaugung 24 eingesaugt.

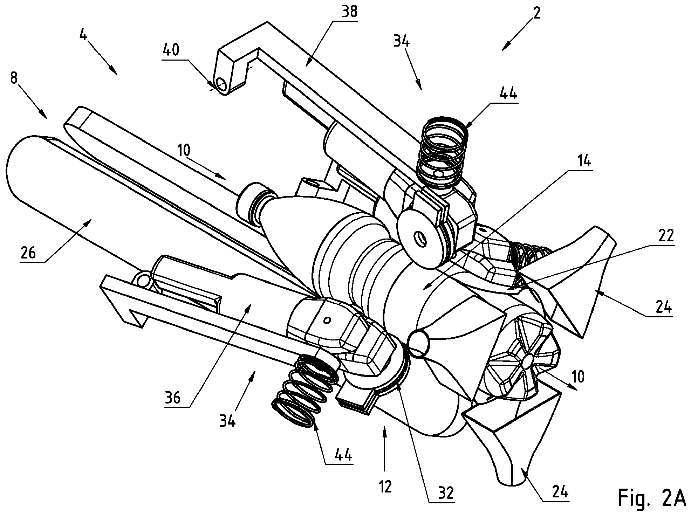

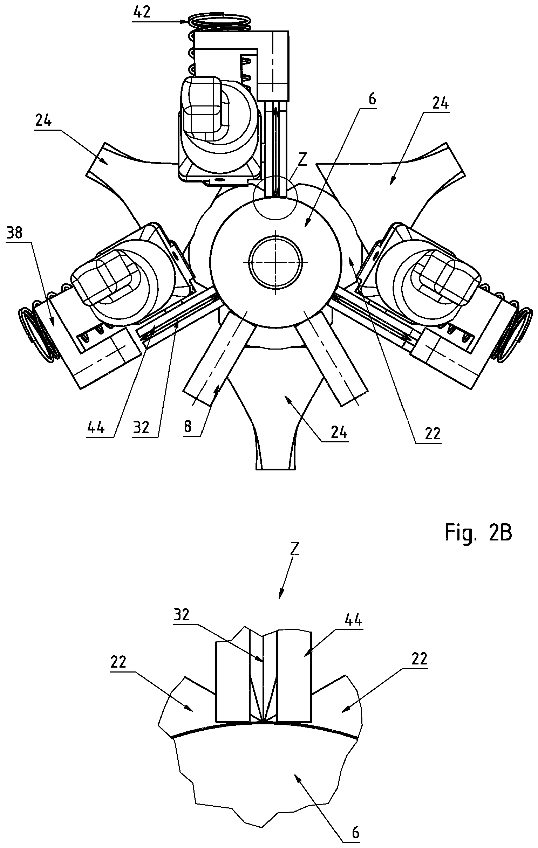

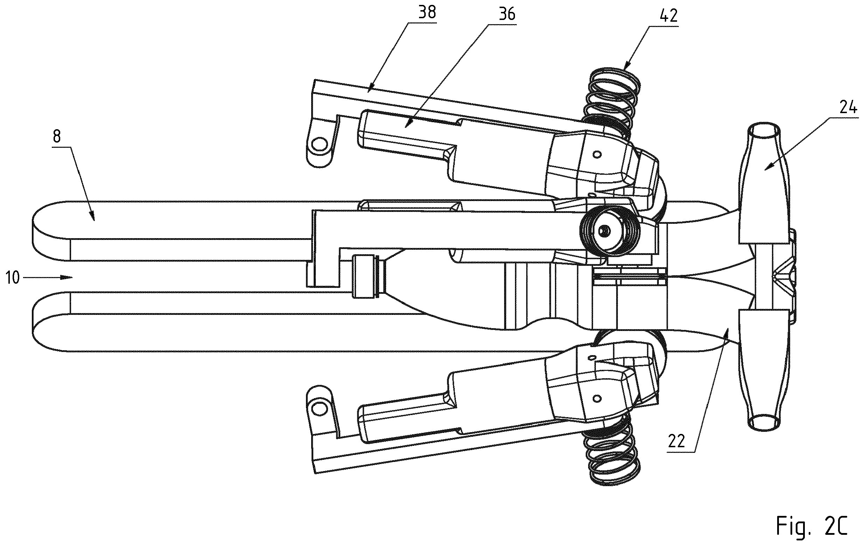

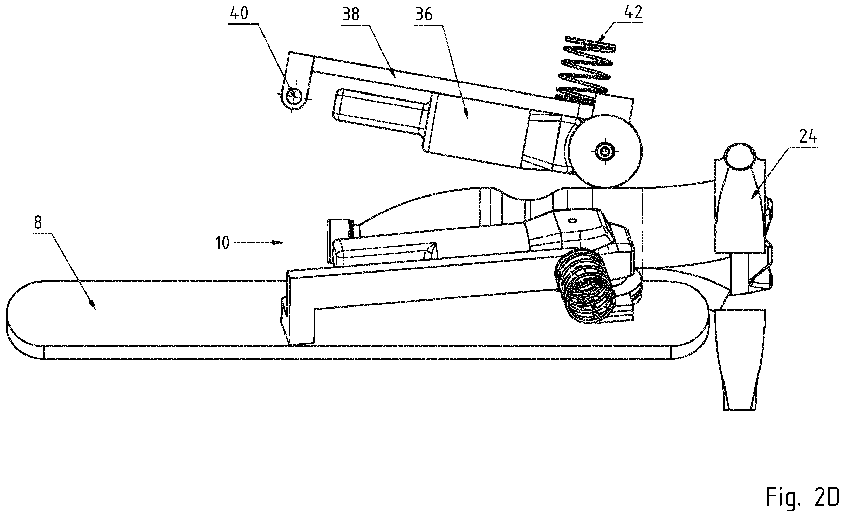

Fig. 2 zeigt eine weitere Ausgestaltung einer Leergutannahmevorrichtung 2. Die Leergutannahmevorrichtung 2 gemäß der Figuren 2A bis 2D unterscheidet sich im Wesentlichen dadurch von der voranstehend beschriebenen Ausgestaltung, dass das Zerteilen bzw. Zerschneiden des Etiketts 14 nicht durch eine Laserschneideinrichtung 16, sondern durch Schneidmesser 32 durchgeführt wird.

Die Schneidmesser 32 sind als Messerscheiben ausgeführt. Die Schneidmesser 32 sind an Schneidvorrichtungen 34 angeordnet, die eine Motoreinheit 36 und einen Schwenk- bzw. Haltearm 38 umfassen.

Ein jeweiliger Schwenk- bzw. Haltearm 38 einer Schneidvorrichtung 34 ist um eine Schwenkachse 40 in Richtung des Leerguts 6 verschwenkbar gelagert. Jedem Schwenk- bzw. Haltearm 38 ist eine Feder 42 zugeordnet, die dazu vorgesehen ist, den Schwenk- bzw. Haltearm 38 entgegen des Leerguts 6 zu verspannen.

Auf diese Weise wird das Schneidmesser 32 an ein Etikett 14 angedrückt, während das Leergut 6 entlang des Transportwegs 10 durch die Leergutannahmevorrichtung 2 geleitet wird. Das Etikett 14 wird in diesem Fall in drei separate Segmente 22 aufgeteilt, denen jeweils eine Absaugung 24 zum Abführen des jeweiligen Segments 22 zugeordnet ist.

Aus der Einzelheit Z der Fig. 2A ist erkennbar, dass ein jeweiliges Schneidmesser 32 von zwei Rollen 44 flankiert wird, die dafür Sorge tragen, dass das Etikett 14 während des Schneidvorgangs gespannt ist. Zudem bieten die Rollen 44 der Messerscheibe 32 eine seitliche Führung.

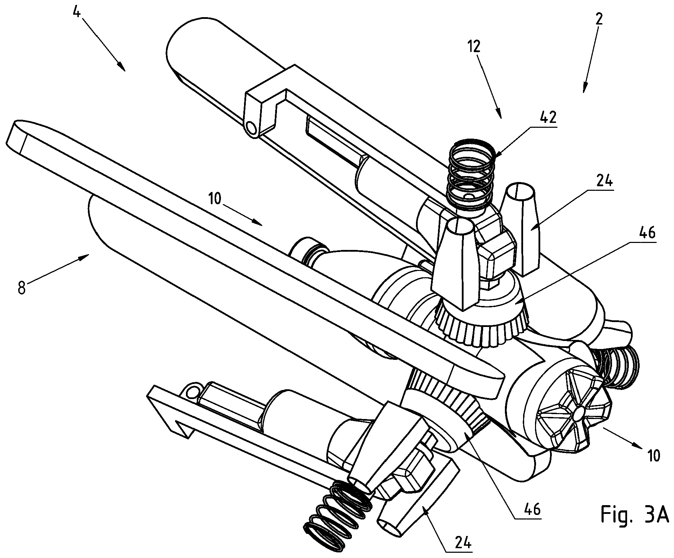

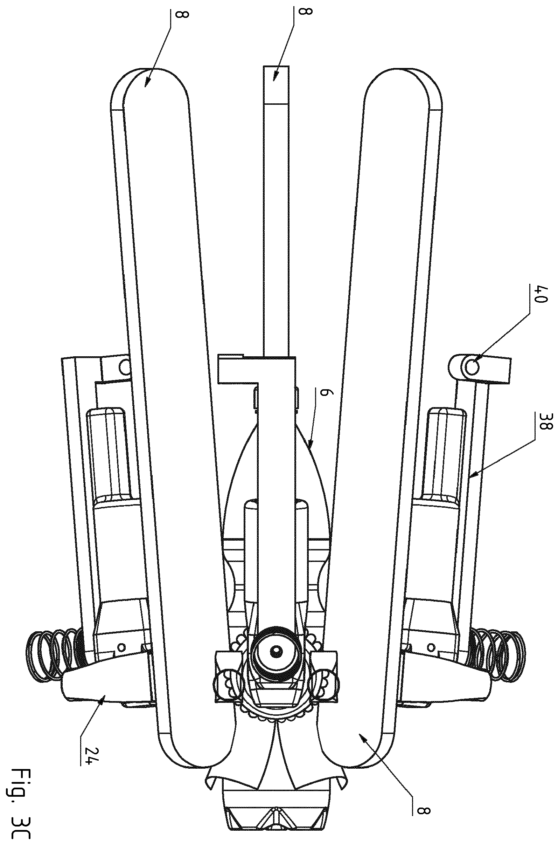

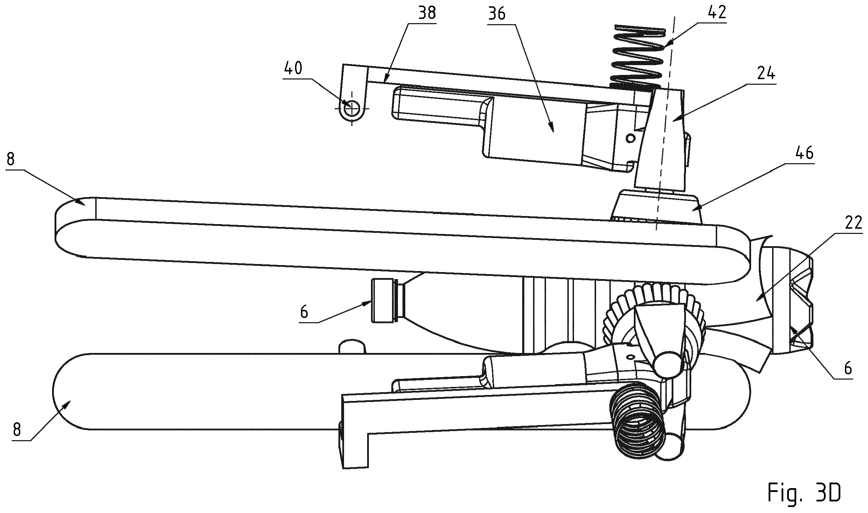

Die Figuren 3A bis 3D zeigen eine weitere Ausgestaltung einer Leergutannahmevorrichtung 2. In diesem Ausführungsbeispiel wird ein Etikett 14 mithilfe von Bürsten 46 von dem Leergut 6 entfernt.

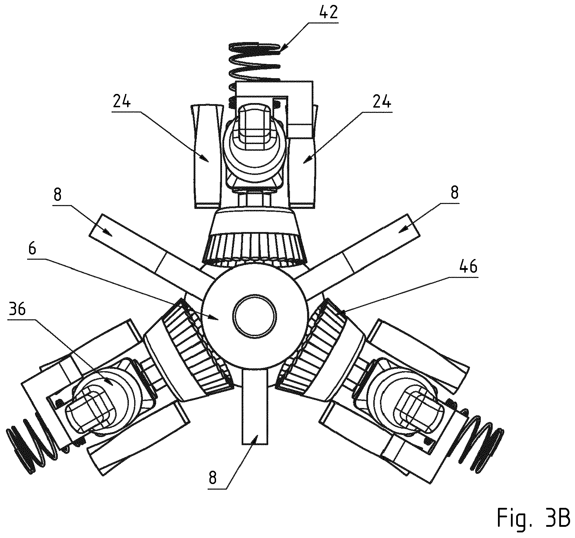

Die Bürsten 46 sind nach Art von Topfbürsten gestaltet. Die bürsten 46 sind unter konstanten Winkelabständen von 120° umfangsseitig um das Leergut 6 verteilt angeordnet, wie in Fig. 3B dargestellt.

Die Rotationsachsen r der Bürsten 46 schneiden sich in einem Punkt. Die Rotationsachsen r der Bürsten 46 sind im Wesentlichen senkrecht zu einer Längsachse a des Leerguts 6 angeordnet.

Die Transportvorrichtung 8 dient im vorliegenden Fall einerseits dem Transport des Leerguts 6 entlang des Transportwegs 10 und andererseits dem Einspannen des Leerguts 6 für die Bearbeitung mit den Bürsten 46.

Jeder Bürste 46 ist eine Absaugung 24 zugeordnet, um losgelöste Etikettenteile abzusaugen. Die Bürsten 46 können mithilfe eines Schwenk- bzw. Haltearms 38 federnd elastisch gegen das Leergut 6 verspannt werden, um eine Anlage zwischen den Bürsten 46 und dem Etikett 14 zu erzeugen. Jede der Bürsten 46 wird vorliegend von jeweils zwei Absaugungen 24 flankiert.

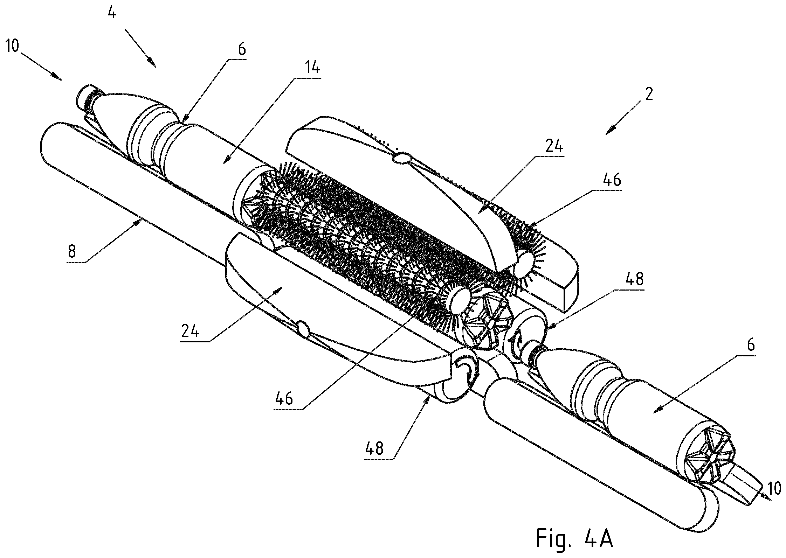

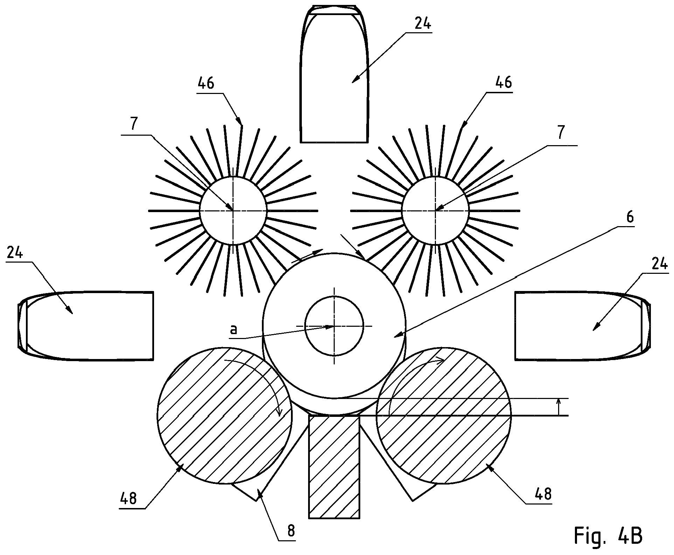

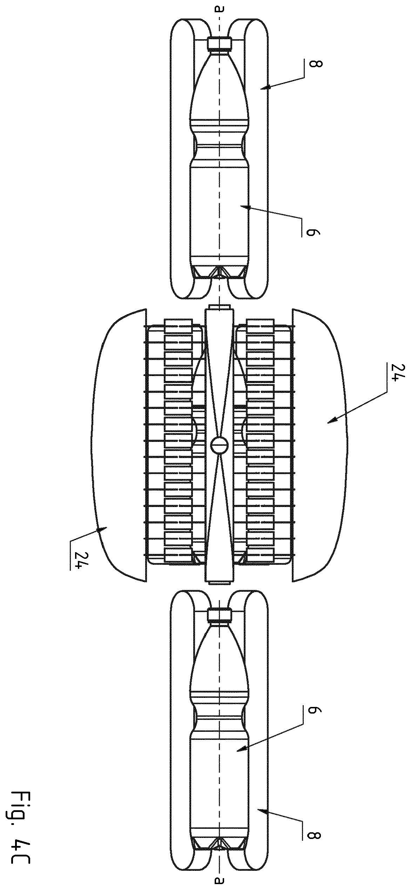

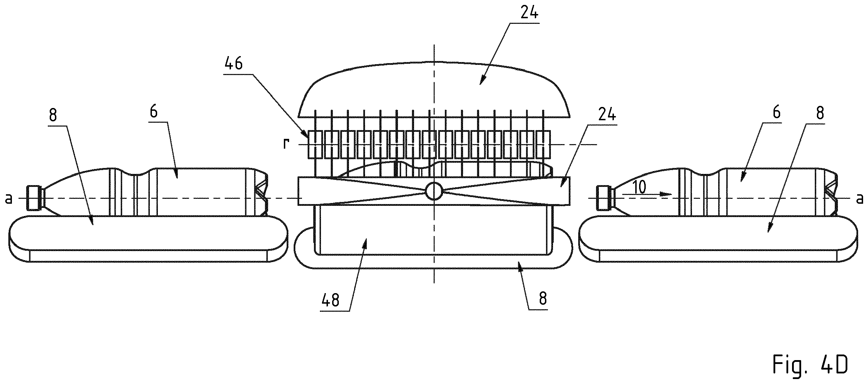

In einem weiteren Ausführungsbeispiel einer Leergutannahmevorrichtung 2 wird das jeweils an einem Leergutbehälter 6 angeordnete Etikett 14 ebenfalls mit Bürsten 46 entfernt (Fig. 4). Die Bürsten 46 sind in diesem Fall als Rundbürsten aufgeführt, deren Länge entlang der Längserstreckung des Leergutbehälters 6, die entlang der Längsachse a des Leergutbehälters 6 gemessen wird, der Länge des Leergutbehälters 6 im Wesentlichen entspricht. Die Rotationsachsen r der Rundbürsten 46 sind im Wesentlichen parallel zur Längsachse a des Leergutbehälters 6 angeordnet.

Wie aus Fig. 4B hervorgeht, rotieren die Bürsten 46 gegenläufig zueinander, was zu einer Rotationsbewegung des Leergutbehälters 6 führt. Auf diese Weise kann die gesamte Umfangsfläche des Leergutbehälters 6 bearbeitet werden.

Weiter ist eine Vorrichtung 48 zum Ausheben des Leerguts 6 von der Transportvorrichtung 18 vorgesehen, um das Leergut 6 gegen die Bürsten 46 zu drücken. Die Vorrichtung 48 kann ebenfalls zur Rotation des Leerguts 6 vorgesehen sein und zwei Rollen aufweisen. Es sind drei Absaugungen 24 vorgesehen, um Etikettenteile oder Etiketten 14 abzusaugen und abzuführen.

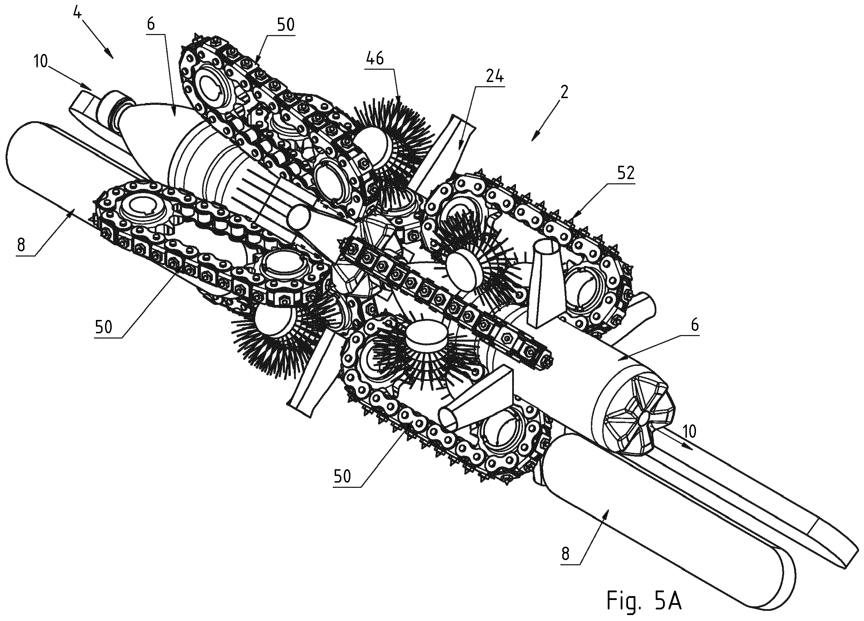

Die Figuren 5A bis 5D zeigen eine weitere Ausgestaltung einer Leergutannahmevorrichtung 2. Die Vorrichtung zum Ab-Etikettieren 12 weist vorliegend Ketten 50 auf, an denen Dorne 52 angeordnet sind, die einem abzulösenden Etikett 14 zugewandt sind.

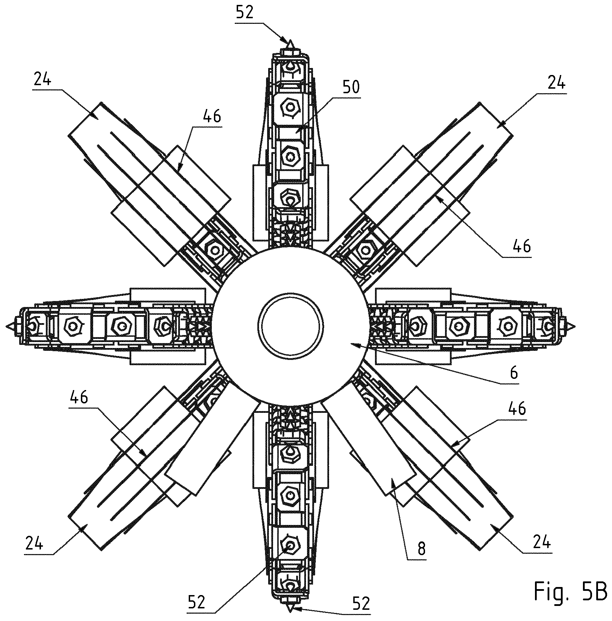

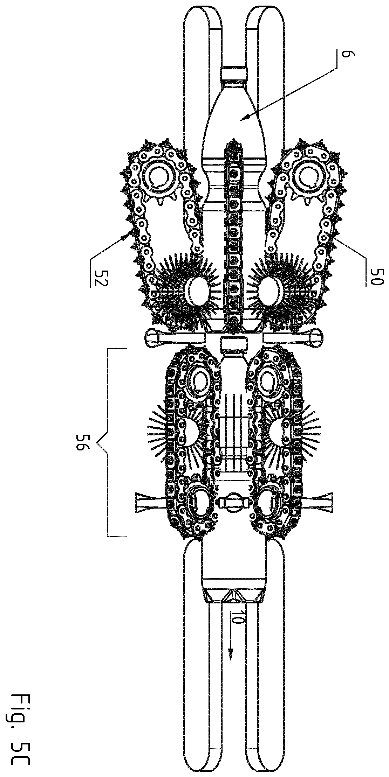

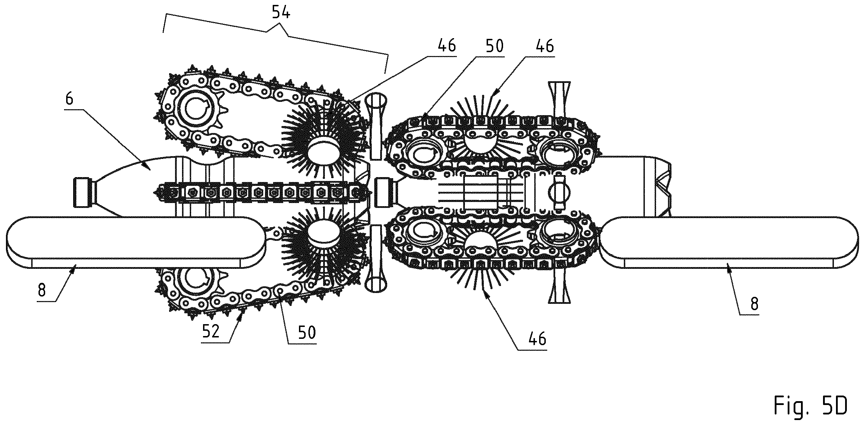

Die Vorrichtung 12 zum Ab-Etikettieren gemäß Fig. 5, weist eine Kombination aus Ketten 50 und Bürsten 46 auf. In einem Einzugsbereich 54 sind vier umfangsseitige Ketten 50 angeordnet, zwischen denen wiederum vier Bürsten 46 positioniert sind, um an dem Leergut 6 angebrachte Etiketten 14 zu entfernen.

In einem zweiten Bereich 56 sind wiederum vier umfangsseitig angeordnete Ketten 50 positioniert, die relativ zu der ersten Anordnung unter einem Winkelversatz positioniert sind, wie in Fig. 5B dargestellt. Auch in dieser Anordnung sind zwischen den Ketten 50 Bürsten 46 angeordnet.

Weiter sind jedem der Bereiche 54 und 56 jeweils vier Absaugungen 24 zugeordnet, um Etiketten 14 oder Teile der Etiketten 14 abzusaugen und abzuführen. Die Ketten bewegen sich entlang des Etiketts entgegen des Transportwegs 10.

Wie aus den Figuren 5A, 5C, und 5D ersichtlich, wird das Leergut 6 bzw. der von dem Etikett 14 befreite Leergutbehälter 6 durch die Ketten 50 bzw. die Vorrichtung 12 zum Ab-Etikettieren nicht zerstört, sondern bleibt im Wesentlichen strukturell erhalten.

Entlang des Transportwegs 10 kann einer Vorrichtung 12 zum Ab-Etikettieren gemäß der Figuren 1 bis 5 eine Destruktionsvorrichtung (nicht dargestellt) nachgeschaltet sein, die dafür vorgesehen ist, den Leergutbehälter 6 nach dem Ab-Etikettieren zu zerstören - insbesondere durch Häckseln, Flaken, Komprimieren und/oder Kompaktieren.

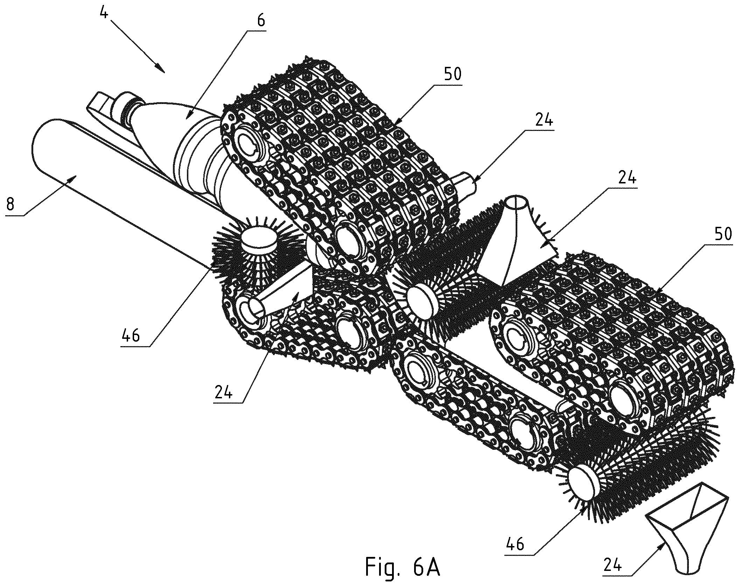

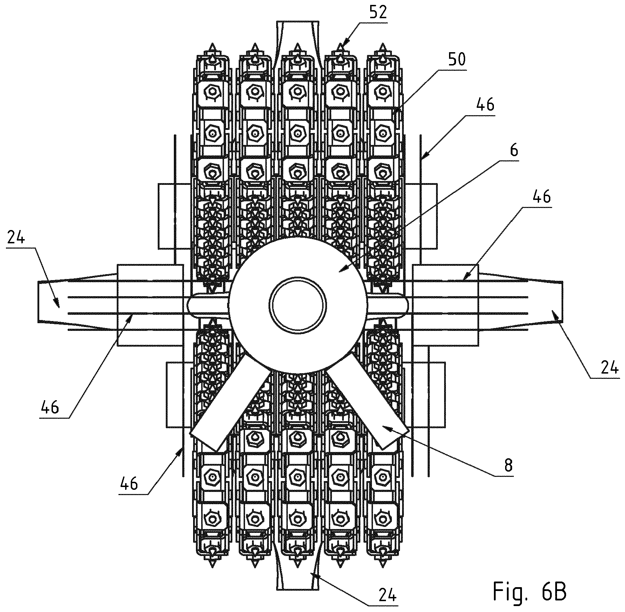

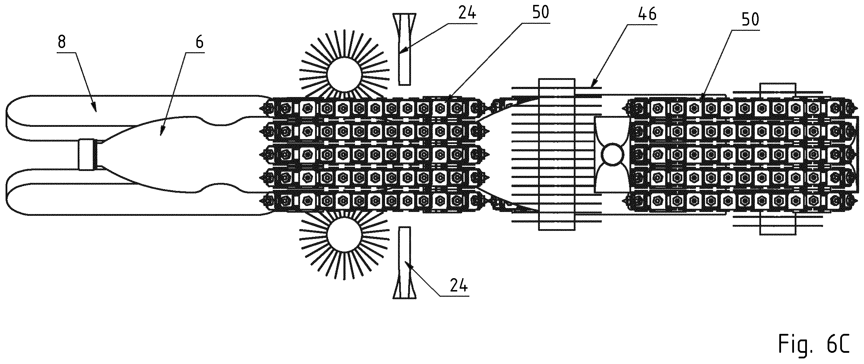

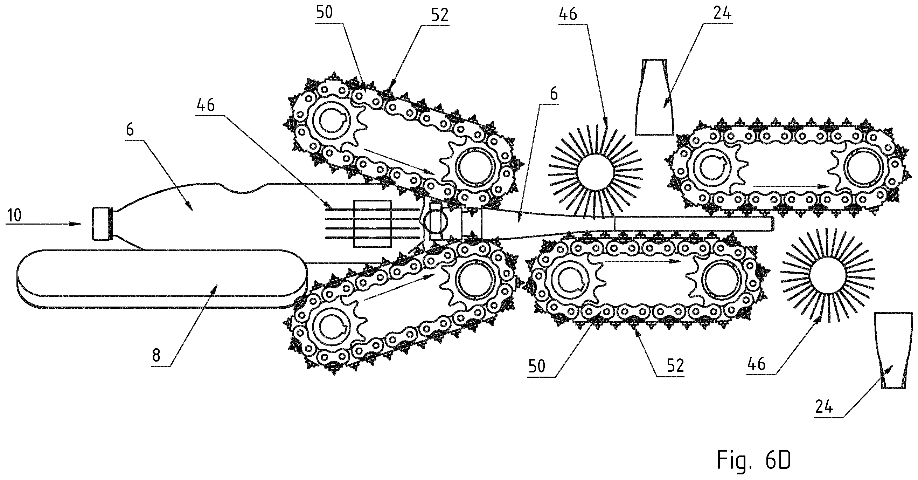

Die Leergutannahmevorrichtung 2 entsprechend Fig. 6 zeigt eine Kombination aus einer Vorrichtung 12 zum Ab-Etikettieren und einer Destruktionsvorrichtung 58 zum Zerstören bzw. Kompaktieren des Leergutbehälters 6.

Die Vorrichtung 12 zum Ab-Etikettieren weist Ketten 50 auf, die zu Blöcken mit je sechs Ketten 50 zusammengefasst sind. Ein Leergutbehälter 6, der entlang des Transportwegs 10 in die Vorrichtung 12 zum Ab-Etikettieren eingeführt wird, wird durch die Ketten 50, die eine Schrägstellung zur Längsachse a aufweisen, komprimiert.

Durch die Dorne 52 und die Bürsten 46 werden an dem Leergut 6 angebrachte Etiketten 14 zumindest teilweise gelöst oder entfernt. Im weiteren Verfahrensgang entlang des Transportwegs 10 wird das Leergut 6 durch die den schrägstehenden Ketten 50 nachgeschalteten Ketten 50 weiter komprimiert.

Die weiteren, den schräglaufenden Ketten 50 nachgeschalteten Bürsten 46, Absaugungen 24 und Ketten 50 entfernen weitere Teile oder Reste des Etiketts 14, wobei die Absaugungen 24 zum Abführen oder Entsorgen der Etikettenteile des Etiketts 14 dienen.

### Bezugszeichen

- 2: Leergutannahmevorrichtung
- 4: Eingabebereich
- 6: Leergut/Leergutbehälter
- 8: Transportverrichtungen
- 10: Transportweg
- 12: Vorrichtung zum Ab-Etikettieren
- 14: Etikett
- 16: Laser
- 18: Strahlaufteiler
- 20: Schneidstrahl
- 22: Segment des Etiketts 14
- 24: Absaugung
- 26: Einzugsbereich
- 28: Abführbereich
- 30: Transportband
- 32: Schneidmesser
- 34: Schneidvorrichtung
- 36: Motoreinheit
- 38: Schwenk- /Haltearm
- 40: Schwenkachse
- 42: Feder
- 44: Rollen
- 46: Bürsten
- 48: Vorrichtung zum Ausheben
- 50: Ketten
- 52: Dorne
- 54: Einzugsbereich
- 56: weiterer Bereich
- 58: Destruktionsvorrichtung

## Patentansprüche

1. Leergutannahmevorrichtung, mit
- einem Eingabebereich (4) zum Eingeben von Leergut (6) in die Leergutannahmevorrichtung (2) und
- einer dem Eingabebereich (4) zugeordneten Transportvorrichtung (8), wobei
- die Transportvorrichtung (8) dazu eingerichtet ist, das Leergut (6) entlang eines Transportwegs (10) zu fördern, **dadurch gekennzeichnet, dass**
- entlang des Transportwegs (10) eine Vorrichtung (12) zum Ab-Etikettieren des Leerguts (6) angeordnet ist, die dazu eingerichtet ist, ein an dem Leergut (6) angebrachtes Etikett (14) zumindest teilweise von dem Leergut (6) zu entfernen.

2. Leergutannahmevorrichtung nach Anspruch 1, **dadurch gekennzeichnet, dass**
- die Transportvorrichtung (8) dazu eingerichtet ist, das Leergut (6) entlang des Transportwegs (10) einer Destruktionsvorrichtung (58) zuzuführen, die insbesondere dazu eingerichtet ist, das Leergut (6) zu zerkleinern und/oder zu komprimieren, und dass
- die Vorrichtung (12) zum Ab-Etikettieren der Destruktionsvorrichtung (58) entlang des Transportwegs (10) insbesondere vorgelagert ist.

3. Leergutannahmevorrichtung nach einem der voranstehenden Ansprüche, **dadurch gekennzeichnet, dass** die Vorrichtung (12) zum Ab-Etikettieren eine Einrichtung (16, 34) zum Aufschneiden oder Auftrennen des Etiketts (14) hat.

4. Leergutannahmevorrichtung nach Anspruch 3, **dadurch gekennzeichnet, dass** die Einrichtung zum Aufschneiden oder Auftrennen des Etiketts (14) dazu ausgebildet ist, das Etikett (14) an wenigstens zwei Stellen derart aufzuschneiden oder aufzutrennen, dass das Etikett (14) in wenigstens in zwei separate Teile (22) zerteilt wird.

5. Leergutannahmevorrichtung nach einem der voranstehenden Ansprüche 3 oder 4, **dadurch gekennzeichnet, dass** die Einrichtung (16, 34) zum Aufschneiden oder Auftrennen des Etiketts (14) wenigstens eine Vorrichtung (16, 18, 20) zum Laserstrahlschneiden aufweist.

6. Leergutannahmevorrichtung nach einem der voranstehenden Ansprüche 3 bis 5, **dadurch gekennzeichnet, dass** die Einrichtung zum Aufschneiden oder Auftrennen des Etiketts (14) eine Messerschneide (32) aufweist, insbesondere eine Messerscheibe (32).

7. Leergutannahmevorrichtung nach einem der voranstehenden Ansprüche 3 bis 6, **dadurch gekennzeichnet, dass** die Einrichtung (16, 24) zum Aufschneiden oder Auftrennen des Etiketts (14) dazu eingerichtet ist, das Etikett (14) relativ zu einer Längserstreckung des Leerguts (6) unter einem Winkel aufzuschneiden oder aufzutrennen.

8. Leergutannahmevorrichtung nach einem der voranstehenden Ansprüche, **dadurch gekennzeichnet, dass** die Vorrichtung (12) zum Ab-Etikettieren wenigstens eine oder mehrere Bürsten (46) aufweist, insbesondere eine oder mehrere Rundbürsten.

9. Leergutannahmevorrichtung nach einem der voranstehenden Ansprüche, **dadurch gekennzeichnet, dass** wenigstens zwei, insbesondere drei, Bürsten (46) vorgesehen sind, wobei wenigstens zwei Bürsten (46) insbesondere dazu eingerichtet sind, gegenläufig zu rotieren.

10. Leergutannahmevorrichtung nach einem der voranstehenden Ansprüche, **dadurch gekennzeichnet, dass** die Vorrichtung (12) zum Ab-Etikettieren eine Absaugvorrichtung (24) aufweist.

11. Leergutannahmevorrichtung nach einem der voranstehenden Ansprüche, **dadurch gekennzeichnet, dass** die Vorrichtung (12) zum Ab-Etikettieren ein Band oder eine Kette (50) mit einer Mehrzahl von dem Etikett (14) zugewandten Dornen (52) aufweist.

12. Leergutannahmevorrichtung nach einem der voranstehenden Ansprüche, **dadurch gekennzeichnet, dass** die Vorrichtung (12) zum Ab-Etikettieren eine Einrichtung zum Bedampfen des Etiketts (14) hat.

13. Leergutannahmevorrichtung nach einem der voranstehenden Ansprüche, **dadurch gekennzeichnet, dass** die zum Vorrichtung (12) Ab-Etikettieren eine Einrichtung zum Wasserstrahlschneiden aufweist.

14. Leergutannahmevorrichtung nach einem der voranstehenden Ansprüche, **dadurch gekennzeichnet, dass** die Vorrichtung zum Ab-Etikettieren (12) eine Einrichtung (8) zum Einspannen des Leerguts (6) aufweist.

15. Leergutannahmevorrichtung nach einem der voranstehenden Ansprüche, **dadurch gekennzeichnet, dass** ein erster Sammelbehälter zum Sammeln von Leergut (6) und ein zweiter Behälter zum Sammeln von Etiketten (14) und/oder Etikettenteilen vorgesehen sind.

16. Verfahren zur Annahme von Leergut, wobei die folgenden Verfahrensschritte durchlaufen werden:
- Eingeben von Leergut (6) in eine Leergutannahmevorrichtung, die eine Vorrichtung (12) zum Ab-Etikettieren aufweist;
- Zuführen des Leerguts (6) zu der Vorrichtung (12) zum Ab-Etikettieren des Leerguts (6);
- zumindest teilweises Entfernen von einem an dem Leergut (6) angebrachten Etikett (14).

17. Verfahren nach Anspruch 16, **dadurch gekennzeichnet, dass** Leergut (6) und Etiketten (14) und/oder Etikettenteile innerhalb der Leergutannahmevorrichtung (2) zumindest teilweise separiert werden.
